**Europäisches Patentamt**

**European Patent Office**

**Office européen des brevets**

(11) Veröffentlichungsnummer: **0 286 940 B1**

(12) **EUROPÄISCHE PATENTSCHRIFT**

(45) Veröffentlichungstag der Patentschrift:
06.06.90

(21) Anmeldenummer: 88105386.2

(22) Anmeldetag: 05.04.88

(51) Int. Cl.⁵: **A47J 43/12**, A01J 13/00

(54) **Vorrichtung zur Erzeugung von Schlagobers.**

(30) Priorität: **15.04.87 AT 956/87**

(43) Veröffentlichungstag der Anmeldung:
**19.10.88 Patentblatt 88/42**

(45) Bekanntmachung des Hinweises auf die Patenterteilung:
**06.06.90 Patentblatt 90/23**

(84) Benannte Vertragsstaaten:
**BE CH DE ES FR GB IT LI LU NL SE**

(56) Entgegenhaltungen:
**EP-A- 0 208 927**
**DE-A- 1 107 161**
**DE-A- 1 809 087**
**DE-U- 7 527 199**

(73) Patentinhaber: **Kirchler, Manfred, Mutterstrasse 5,**
**A-6800 Feldkirch(AT)**

(72) Erfinder: **Kirchler, Manfred, Mutterstrasse 5,**
**A-6800 Feldkirch(AT)**

(74) Vertreter: **Hefel, Herbert, Dipl.-Ing., Egelseestrasse 65a**
**Postfach 61, A-6800 Feldkirch(AT)**

## Beschreibung

Die Erfindung bezieht sich auf eine Vorrichtung zur Erzeugung von Schlagobers mit einem drucklosen Vorratsraum für die Aufnahme von Rahm, einer mittels eines Motors antreibbaren Pumpe, insbesondere einer Zahnradpumpe, einer den drucklosen Vorratsraum mit der Pumpe verbindenden Ansaugleitung und einen von der Pumpe zu einem Homogenisator mit einer Auslaßtülle führenden Druckleitung und die Ansaugleitung mit einem Luftansaugekanal verbunden und der Motor mit einem Schalter in Betrieb setzbar ist.

Vorrichtungen dieser Art (AT-PS 127 802, AT-PS 284 604, AT-PS 318 322, DE-OS 18 09 087) haben entweder vor oder auch nach dem Homogenisator - in Fließrichtung der Sahne gesehen - ein Schließventil. Wegen dieses Schließventiles muß in der Ansaugleitung zwischen dem Luftansaugekanal und der Pumpe ein Rückschlagventil vorgesehen werden, damit nach dem Abschalten des Pumpantriebmotores die Ansaugleitung druckfrei gehalten werden kann. Würde dieses Rückschlagventil nicht vorgesehen, so besteht die Gefahr, das Sahne in den Luftansaugkanal zurückfließt. Das führt zu Funktionsstörungen der Vorrichtung. Die nach dem Homogenisator im Bereich unmittelbar vor der Austrittstülle vorgesehenen Ventile sind in der Regel als federbelastete Kugelventile ausgebildet. Da diese Ventile, sobald die Haltekraft der Feder druckseitig überschritten ist, rasch öffnen, kann mit Vorrichtungen dieser Art die austretende Sahnemenge nicht gesteuert werden. Ferner ist die Durchlaßöffnung beim Kugelventil darüberhinaus ein relativ enger Ringspalt, der in der Größenordnung der Spalte und Durchtrittsöffnungen des Homogenisators liegt. Wenn nun die den Homogenisator verlassende Schlagrahmmenge nun neuerlich durch einen solchen Ringspalt gedrückt wird, besteht die Gefahr, daß sich das Schlagobers in seine Bestandteile (Rahm und Luft) zersetzt.

Es ist auch ein Schlagsahneabzapfgerät mit einer Luft-Sahne-Mischeinrichtung bekannt (DE-AS 11 07 161), bei welchem das Vorratsgefäß, bzw. die darin befindliche Sahne durch ein Druckluftpolster belastet ist. Diese Geräte besitzen ein Steigrohr und ein Vermischungssystem. Bei diesen Geräten tritt infolge des Druckausgleiches im Inneren des Gerätes ein Absinken der Flüssigkeit im Steigrohr bis zur Höhe des Flüssigkeitsspiegels im Druckgefäß ein. Wenn nun der Zapfhahn geöffnet wird, schnellt die Flüssigkeit im Steigrohr hoch und erzeugt einen heftigen Stoß auf das Verschäumungssystem. Dadurch wird jedesmal ein Teil der Sahne, die sich in der Garniertülle befindet, hinausgeschleudert. Dieser Stoß verstärkt sich mit dem Absinken des Flüssigkeitsspiegels. Um dies zu verhindern, hat man zwischen dem Mischsystem und dem Steigrohr oder im Steigrohr selbst ein Rückschlagventil vorgesehen. Dieses Rückschlagventil verhindert das Rückfließen der Flüssigkeit im Steigrohr und damit den Stoß auf das Verschäumungssystem. Es bewirkt aber gleichzeitig auch, daß das ganze Kanalsystem voller Flüssigkeit bleibt und die Flüssigkeit auch in die Luftdüse eindringen kann, wenn diese nicht besonders geschützt wird. Bei einer Weiterentwicklung eines solchen mit Druckluft betriebenen Gerätes wurden daher Maßnahmen vorgesehen, daß bei einer derartigen Mischvorrichtung die Flüssigkeit im Steigrohr und damit im Kanalsystem nur so weit absinkt, daß die Sahne oder Flüssigkeit dicht unter der Druckluftdüse stehen bleibt und somit nicht mehr in diese eindringen kann. Zu diesem Zweck wurde das zwischen Mischsystem und Steigrohr bzw. im Steigrohr selbst vorgesehene Rückschlagventil als Verzögerungsrückschlagventil ausgebildet, welches nicht sofort schließt, wenn der Zapfhahn geschlossen wird, sondern einer bestimmten Flüssigkeits- oder Sahnemenge den Rückfluß gestattet.

Von diesem Stand der Technik geht die Erfindung aus, die daraus abzielt, diese eingangs aufgezeigten Nachteile bei gleichartigen Vorrichtungen zu ersetzen, was vorschlagsgemäß dadurch gelingt, daß an der Druckleitung eine zum Vorratsraum führende Entlastungsleitung angeschlossen ist, daß in der Entlastungsleitung ein Ventil liegt, welches mit dem Schalter in Wirkverbindung steht und das Ventil bei laufender Pumpe geschlossen, bei stillstehender Pumpe hingegen geöffnet ist. Dank des erfindungsgemäßen Vorschlages wird, sobald die Pumpe abgeschaltet wird, beim Abschalten die Druckleitung über die Entlastungsleitung mit dem drucklosen Vorratsraum verbunden und somit der Druck in diesem Abschnitt abgebaut, so daß über die Pumpe die Sahne auch bei Vorrichtungen dieser Bauart nicht in den Bereich des Luftansaugkanales zurückgedrängt werden kann.

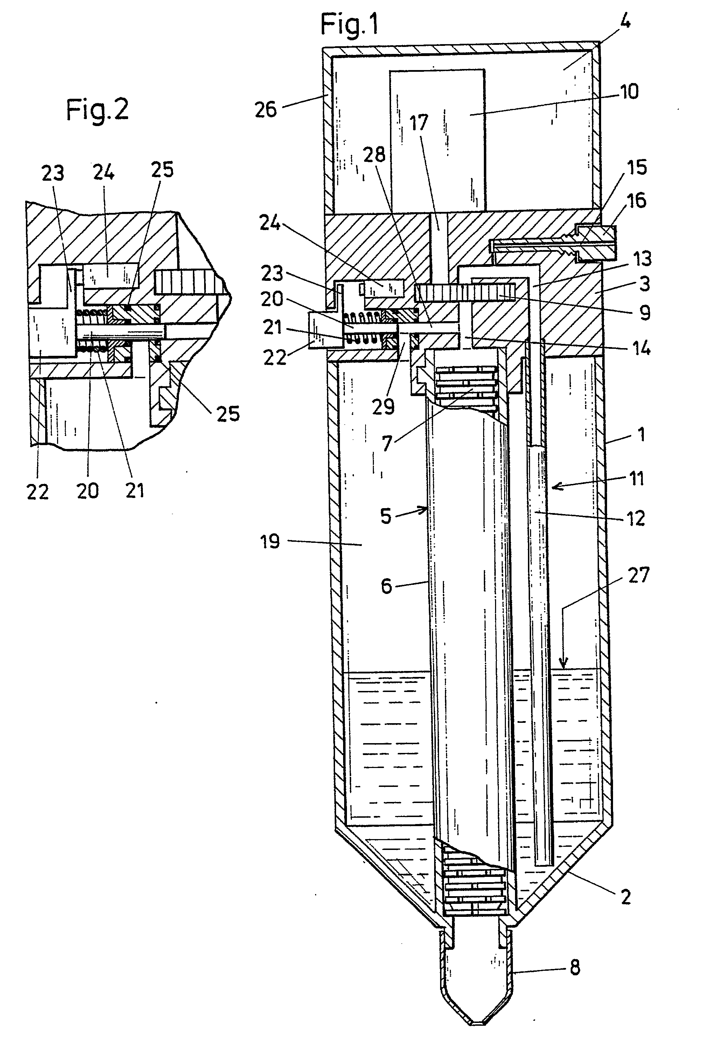

Um die Erfindung zu veranschaulichen, wird ein Ausführungsbeispiel anhand der Zeichnung näher erläutert. Es zeigen: Fig. 1 einen Längsschnitt durch eine handgeführte Vorrichtung; Fig. 2 ein Detail in einem gegenüber Fig. 1 vergrößerten Maßstab.

Die Vorrichtung zur Erzeugung von Schlagobers weist einen zylindrischen drucklosen Behälter 1 mit vertikal stehender Achse auf, der an seinem unteren Ende von einem nach unten vorspringenden Kegel 2 abgeschlossen ist. Im oberen Abschluß 3 dieses zylindrischen Behälters 1 sind für den Betrieb der Vorrichtung wesentliche Teile inkludiert, auf die noch im folgenden näher eingegangen werden wird. Oberhalb des oberen Abschlusses 3 ist eine Kammer 4, die von einem Gehäuse 26 begrenzt wird. Mittig im zylindrischen Behälter 1 ist ein Homogenisator 5 angeordnet, der aus einem äußeren Rohr 6 und einem Mischeinsatzrohr 7 besteht, wie bei solchen Geräten an sich bekannt. Dieser Homogenisator 5 mündet in die Auslaßtülle 8.

Im oberen Abschluß 3 ist eine kleine Zahnradpumpe 9, die über einen Motor 10 und über eine Welle 17 antreibbar ist. Dieser Motor 10 ist in der Kammer 4 angeordnet und in dieser Kammer kann auch ein Akkumulator für den Betrieb dieses Motors 9 untergebracht sein. Aus dem als zylindrischer drucklosen Behälter 1 ausgebildeten drucklosen Vorratsraum 19 führt eine Ansaugleitung 11 zur Pumpe 9, wobei ein erster Teil dieser Ansaugleitung durch ein Rohr oder Schlauchstück 12 gebildet ist, der andere Teile durch eine im Abschluß 3 verlaufende Bohrung 13. Von der Pumpe 9 führt eine Bohrung als Druckleitung 14 direkt zum Homogenisator. Im Bereich vor der Pumpe 9 ist die Bohrung 13, die Teil der Ansaugleitung 11 bildet, mit einem nach außen Führenden Luftansaugekanal 15 verbunden, der hier durch eine Einschraubdüse 16 verläuft.

In die als Druckleitung 14 ausgebildete Bohrung, die mittig im oberen Abschluß 3 liegt, mündet von der Seite her ein Abschnitt 28 einer Entlastungsleitung, die andererseits über den Abschnitt 29 mit dem drucklosen Vorratsraum 19 verbunden ist, der vom drucklosen Behälter 1 begrenzt ist, der Abschnitt 28 der Entlastungsleitung verläuft rechtwinkelig zur Zylinderachse und ferner radial zum Zylinder. In diesen radial verlaufenden Abschnitt 28 der Entlastungsleitung ist ein Ventilschaft 20 geführt, der eine Schraubenfeder 21 axial durchsetzt. Dieser Ventilschaft 20 ist an seinem äußeren Ende mit einem Betätigungsknopf 22 fest verbunden, an dessen Innenseite sich die erwähnte Feder 21 endseitig abstützt. Dieser Betätigungsknopf 22 besitzt auch eine seitlich abstehende Fahne 23. Im Verschiebebereich des Betätigungsknopfes 22 liegt ein Mikroschalter 24, bei dessen Betätigung der Motor 10 und damit die Pumpe 9 eingeschaltet werden. Derjenige Abschnitt 29 der Entlastungsleitung, der direkt in den Vorratsraum 19 mündet, liegt in jenem Bereich des ersterwähnten Abschnittes 28 dieser Leitung, der vom Ventilschaft 20 bei der Betätigung des Knopfes 22 überfahren wird, so daß dieser Ventilschaft 20 die Entlastungsleitung aus den beiden Abschnitten 28 und 29 je nach der Stellung des Betätigungsknopfes 22 offen (Fig. 1) oder geschlossen (Fig. 2) hält. In dem vom Ventilschaft 20 überfahrenen Bereich sind im Abschnitt 28 der Entlastungsleitung als Dichtorgane kleine O-Ringe vorgesehen, die mit dem Ventilschaft 20 zusammenwirken.

Sowohl der Behälter 1 wie auch das Gehäuse 26, das die Kammer 4 begrenzt, können mit dem Abschlußteil 3 über ein Gewinde oder einen Bajonettverschluß verbunden sein.

Fig. 1 zeigt die Vorrichtung betriebsbereit. In den Behälter 1 ist Rahm 27 eingefüllt. Die Vorrichtung ist handgeführt und wird, wenn sie nicht gebraucht wird, in einem entsprechend geeigneten Halter stehend aufbewahrt. Dabei können die in der Kammer 4 befindlichen Akkumulatoren aufgeladen werden. Zweckmäßig ist es dabei auch, den Halter so auszubilden, daß der im Behälter 1 befindliche Rahm kühl gehalten wird. Soll nun Schlagobers erzeugt werden, so wird die Vorrichtung aus dem hier nicht gezeigten Halter entnommen und der Betätigungsknopf 22 wird gedrückt. Dadurch wird über den Schalter 24 der Motor 10 und damit die Pumpe 9 eingeschaltet; gleichzeitig fährt infolge der Betätigung des Knopfes 22 der Ventilschaft 20 in den Abschnitt 28 der Entlastungsleitung hinein (Fig. 2) und sperrt dadurch den Durchgang zum Abschnitt 29 dieser Entlasttungsleitung. Über die Ansaugleitung 11 wird nun Rahm angesaugt und gleichzeitig auch Luft über den Luftansaugekanal 15. Das aus Rahm und Luft bestehende Gemisch wird nun durch und über die Pumpe 9 und die Druckleitung 14 in und durch den Homogenisator 5 gepreßt, wodurch sich in bekannter Weise Schlagobers bildet, welches über die Austrittstülle 8 austritt.

Ist genügend Schlagobers auf diese Weise erzeugt, so wird der Betätigungsknopf 22 freigegeben, der nun unter der Wirkung der Kraft der Feder 21 in seine ursprüngliche Lage (Fig. 1) zurückgedrängt wird. Dadurch wird der Motor 10 abgeschaltet und die Pumpe 9 stillgesetzt, gleichzeitig wird die Druckleitung 14 über die Abschnitte 28 und 29 der Entlastungsleitung mit dem drucklosen Vorratsraum 19 verbunden, so daß der Druck in dieser Leitung 14 beim Abschalten des Motors 10 zusammenbricht. Dadurch ist mit Sicherheit unterbunden, daß ein Teil des Schlagobers über die Pumpe zurückgedrängt wird und in der Folge eventuell in den Luftansaugekanal 15 gelangt. Unbeschadet dessen ist dieser Luftansaugekanal 15 als Einschraubdüse 16 ausgebildet, so daß diese Düse und damit der gesamte Kanal herausgenommen und gereinigt werden kann. Dieser Luftansaugekanal 15 besitzt ja einen sehr kleinen Querschnitt, der infolge seiner Kleinheit besonders verstopfungsgefährdet ist.

Anstelle eines Aus-Ein-Schalters 24 kann hier auch ein Regler eingesetzt werden, der die Drehzahl des Motors 10 in Abhängigkeit seiner Stellung regelt, das heißt, je weiter der Betätigungsknopf 22 eingedrückt wird, um so schneller dreht der Motor 10 die Pumpe 9 an, wodurch die erzeugte und austretende Schlabobersmenge feinstufig geregelt werden kann.

Die Abschnitte 28 und 29 der Entlastungsleitung und der Ventilschaft 20 bilden hier ein einfaches Eckventil. Grundsätzlich ist es möglich, hier auch andere Ventile vorzusehen, beispielsweise könnte ein kleines Magnetventil angeordnet werden, dessen Erregerwicklung zur Wicklung des Motors 10 parallel geschaltet ist.

Anstelle der direkten und unmittelbaren Verbindung zwischen dem Ventilschaft 20 und dem Betätigungsknopf 22 könnte auch ein kleines Hebelwerk vorgesehen werden, mit dem der vom Betätigungsknopf 22 überstrichene Weg übersetzt wird. Der gezeigte Betätigungsknopf wird hier axial verschoben. Es liegt im Rahmen der Erfindung, anstelle eines solchen axial verschiebbaren Betätigungsknopfes einen schwenkbaren Betätigungshebel anzuordnen.

Wurde die Erfindung in Zusammenhang mit einem handgeführten Gerät erläutert, so ist es möglich und liegt im Rahmen der Erfindung, die vorschlagsgemäße Maßnahme auch bei einem ortsfesten Standgerät anzubringen. Ist vorstehend erläutert, daß der Motor 10 über aufladbare Akkumulatoren betrieben wird, so wäre es denkbar, ein Gerät dieser Art auch mit einem direkten Netzanschluß auszustatten. Ferner sei erwähnt, daß anstelle der Zahnradpumpe 9 auch ein anderer Verdichter angeordnet sein kann, beispielsweise eine Kolbenpumpe.

**Patentansprüche**

1. Vorrichtung zur Erzeugung von Schlagobers mit einem drucklosen Vorratsraum (19) für die Aufnahme von Rahm, einer mittels eines Motors (10) antreibbaren Pumpe (9), insbesondere einer Zahnradpumpe, einer den drucklosen Vorratsraum (19) mit der Pumpe (9) verbindenden Ansaugleitung (11) und einen von der Pumpe (9) zu einem Homogenisator (5) mit einer Auslaßtülle (8) führenden Druckleitung (14) und die Ansaugleitung (11) mit einem Luftansaugekanal (15) verbunden und der Motor (10) mit einem Schalter (24) in Betrieb setzbar ist, dadurch gekennzeichnet, daß an der Druckleitung (14) eine zum drucklosen Vorratsraum (19) führende Entlastungsleitung (28 - 29) angeschlossen ist, daß in der Entlastungsleitung (28 - 29) ein Ventil liegt, welches mit dem Schalter (24) in Wirkverbindung steht und das Ventil bei laufender Pumpe (9) geschlossen (Fig. 2), bei stillstehender Pumpe (9) hingegen geöffnet ist (Fig. 1).

2. Vorrichtung nach Anspruch 1, dadurch gekennzeichnet, daß die Entlastungsleitung (28 - 29) mindestens einen parallel zur Verschieberichtung des Betätigungsgliedes (22) des Schalters (24) verlaufenden Leitungsabschnitt (28) aufweist und das Betätigungsglied (22) einen in diesen Leitungsabschnitt (28) ragenden Ventilschaft (20) besitzt, wobei in dem vom Ventilschaft (20) bei der Betätigung des Schalters (24) überfahrbaren Bereich des Leitungsabschnittes (28) ein in den drucklosen Vorratsraum (19) mündender Leitungsabschnitt (29) anschließt.

3. Vorrichtung nach Anspruch 2, dadurch gekennzeichnet, daß der parallel zur Verschieberichtung des Betätigungsgliedes (22) des Schalters (24) verlaufende Leitungsabschnitt (28) rechtwinkelig zur Achse des Homogenisators (5) liegt.

4. Vorrichtung nach Anspruch 2, dadurch gekennzeichnet, daß das Betätigungsglied (22) für den Schalter (24) aus einem axial gegen die Kraft einer Feder (21) verschiebbaren Druckknopf besteht, in dessen Verschiebeweg ein Schalthebel eines Mikroschalters (24) liegt.

5. Vorrichtung nach Anspruch 1, dadurch gekennzeichnet, daß der drucklosen Vorratsraum (19) als Zylinder (1) mit vertikaler Achse ausgebildet ist, wobei der untere Abschluß des Zylinders (1) durch einen nach unten vorspringenden Kegel (2) gebildet ist und der obere Abschluß (3) den drucklosen Vorratsraum (19) nach oben hin begrenzt und Bohrungen (13, 14, 28, 29) für die Ansaug-, die Druck- und die Entlastungsleitung aufweist, ferner die Pumpe (9) und den Luftansaugekanal (15) sowie den Schalter (24) und dessen Betätigungsglied (22) trägt, und der rohrförmige Homogenisator (5) im zylindrischen drucklosen Vorratsraum (19) achsmittig angeordnet ist.

6. Vorrichtung nach Anspruch 5, dadurch gekennzeichnet, daß oberhalb des oberen Abschlußes (3) des drucklosen Vorratsraumes (19) eine Kammer (4) vorgesehen ist zur Aufnahme des Antriebsmotors (10) für die Pumpe (9) und des zu dessen Betrieb erforderlichen Akkumulators.

7. Vorrichtung nach Anspruch 2 oder 4, dadurch gekennzeichnet, daß die Feder (21) als Schraubenfeder ausgebildet ist und vom Ventilschaft (20) axial durchsetzt ist.

## Claims

1. A device for producing whipped cream, with a pressureless reservoir (19) for accommodating cream, a pump (9) drivable by a motor (10), in particular a cogwheel pump, an intake pipe (11 ) connecting the pressureless reservoir (19) with the pump (9), and a pressure line (14) leading from the pump (9) to a homogeniser (5) with an outlet spout (8), and the intake pipe (11) is connected to an air intake duct (15 ) and the motor (10) can be started by a switch (24), characterised in that a relief line (28–29) leading to the pressureless reservoir (19) is attached to the pressure line (14), in that the relief line (28–29) contains a valve which is in working connection with the switch (24), and the valve is closed when the pump (9) is running (Fig. 2) but open when the pump (9) is at a standstill (Fig. 1).

2. A device according to Claim 1, characterised in that the relief line (28–29) has at least one line portion (28) parallel to the displacement direction of the actuating member (22) of the switch (24), and the actuating member (22) has a valve stem (20) projecting into this line portion (28), a line portion (29) which opens into the pressureless reservoir (19) connecting in the region of the line portion (28) which can be travelled over by the valve stem (20) when the switch (24) is actuated.

3. A device according to Claim 2, characterised in that the line portion (28) parallel to the displacement direction of the actuating member (22) of the switch (24) is at right angles to the axis of the homogeniser (5).

4. A device according to Claim 2, characterised in that the actuating member (22) for the switch (24) comprises a push-button which is axially displaceable against the force of a spring (21) and in whose displacement path there is a switch lever of a microswitch (24).

5. A device according to Claim 1, characterised in that the pressureless reservoir (19) is constructed as a cylinder (1) with a vertical axis, the lower termination of the cylinder (1) being formed by a cone (2) projecting downwards and the upper termination (3) defining the pressureless reservoir (19) towards the top and having bores (13, 14, 28, 29) for the intake, pressure and relief lines, and further carrying the pump (9) and the air intake duct (15) and the switch (24) and the actuating member (22) thereof, and in that the tubular homogeniser (5) is arranged axis-centrally in the cylindrical pressureless reservoir (19).

6. A device according to Claim 5, characterised in that a chamber (4) is provided above the upper termination (3) of the pressureless reservoir (19) for accommodating the drive motor (10) for the pump (9) and the accumulator necessary for the operation thereof.

7. A device according to Claim 2 or 4, characterised in that the spring (21) is constructed as a helical spring and is axially penetrated by the valve stem (20).

## Revendications

1. Dispositif pour la fabrication de crème fouettée avec enceinte de stockage sans pression (19) destinée à recevoir la crème, une pompe (9) pouvant être entraînée par un moteur (10) et, en particulier, une pompe à engrenages, une conduite d'aspiration (11) reliant l'enceinte de stockage sans pression (19) avec la pompe (9) et une conduite de refoulement (14) menant de la pompe (9) à un homogénéiseur (5) avec une tubulure de sortie (8), la conduite d'aspiration (11) étant reliée à un canal d'aspiration d'air (15) et le moteur pouvant être mis en service par un commutateur (24), caractérisé en ce qu'une conduite de délestage (28, 29) menant à l'enceinte de stockage sans pression (19) est raccordée à la conduite de refoulement (14), en ce que, dans la conduite de délestage (28, 29) se trouve une vanne qui est en liaison fonctionnelle avec le commutateur (24), et la vanne étant fermée quand la pompe (9) fonctionne (figure 2) et étant ouverte quand la pompe (9) est à l'arrêt (Fig. 1).

2. Dispositif selon la revendication 1, caractérisé en ce que la conduite de délestage (28, 29) présente au moins une section de conduite (28) disposée parallèlement à la direction de déplacement de l'élément de commande (22) du commutateur (24) et que l'élément de commande (22) possède une tige de vanne (20) faisant saillie dans cette section de conduite (28) tandis qu'une section de conduite (29) débouchant dans l'enceinte de stockage sans pression (19) se raccorde dans la zone de la section de conduite (28) où passe la tige de vanne (20) lorsqu'on actionne le commutateur (24).

3. Dispositif selon la revendication 2, caractérisé en ce que la section de tuyauterie (28) disposée parallèlement à la direction de déplacement de l'élément de commande (22) du commutateur (24) est situé perpendiculairement par rapport à l'axe de l'homogénéiseur (5).

4. Dispositif selon la revendication 2, caractérisé en ce que l'élément de commande (22) pour le commutateur (24) est constitué d'un bouton poussoir pouvant se déplacer axialement à l'encontre de la force d'un ressort (21), un levier de commutation d'un microcommutateur (24) étant sur la course de ce bouton poussoir.

5. Dispositif selon la revendication 1, caractérisé en ce que l'enceinte de stockage sans pression (19) est constituée sous forme d'un cylindre (1) à axe vertical, tandis que la fermeture du cylindre (1) dans le bas est constituée par un cône (2) faisant saillie vers le bas et que la fermeture supérieure (3) délimite le réservoir de stockage sans pression (19) vers le haut et présente des alésages (13, 14, 28, 29) pour les conduites d'aspiration, de refoulement et de délestage et comporte, en outre, la pompe (9) et le canal d'aspiration d'air (15) ainsi que le commutateur (24) et son élément de commande (22), tandis que l'homogénéiseur tubulaire (5) est disposé sur l'axe central de l'enceinte de stockage cylindrique sans pression (19).

6. Dispositif selon la revendication 5, caractérisé en ce qu'une chambre (4) est prévue au-dessus de la fermeture supérieure (3) de l'enceinte de stockage sans pression (19), pour recevoir le moteur d'entraînement (10) de la pompe (9) et l'accumulateur nécessaire pour le fonctionnement de celui-ci.

7. Dispositif selon la revendication 2 ou 4, caractérisé en ce que le ressort (21) est constitué par un ressort hélicoïdal et est traversé axialement par la tige de vanne (20).

Fig.1

Fig.2